# FASCICULE DE BREVET EUROPEEN

(11) **EP 2 042 022 B1**
(45) Date de publication et mention de la délivrance du brevet: **19.09.2012**
(21) Numéro de dépôt: 08358011.8
(22) Date de dépôt: 23.09.2008
(51) Int. Cl.: A01D 46/26

(54) **Pince vibrante allégée, pour machines de récolte de fruits par secouage**
Leichtere Ausführung einer Rüttelzange für Rüttelerntemaschinen zur Obsternte
Lightened vibrating clamps for machines that harvest fruit by shaking

(30) Priorité: 28.09.2007 FR 0706834
(43) Date de publication de la demande: 01.04.2009
(73) Titulaire: PELLENC, 84120 Pertuis (FR)
(72) Inventeur: Pellenc, Roger, 84120 Pertuis (FR); Rolland, Christian, 84160 Cucuron (FR)
(74) Mandataire: Marek, Pierre

(56) Documents cités:
- FR-A- 2 556 556
- FR-A- 2 799 610
- US-A- 5 927 056

## Description

La présente invention concerne une pince vibrante allégée, pour machines de récolte de fruits par secouage.

Plus précisément, elle vise une pince vibrante du genre constitué de deux mâchoires de forme allongée dont l'une au moins est mobile et dont les mouvements de rapprochement (serrage) et d'écartement (ouvertures) sont obtenus au moyen d'un ou plusieurs vérins, généralement hydrauliques ; un vibreur à masses rotatives excentrées ou à masses à déplacement alternatif, fixé sur l'ossature de la pince, permet de communiquer des vibrations à hautes fréquences à celle-ci.

On connaît de nombreuses réalisations de telles pinces vibrantes de récolte mécanique de fruits.

Des pinces vibrantes de ce genre sont par exemple décrites dans les documents FR-2 799 610 et US- 4 903 471. Montées sur des véhicules équipés des différents dispositifs commandant et régulant leur fonctionnement, elles permettent la récolte mécanique de fruits par secouage des arbres ou arbustes fruitiers tels que, par exemple, noyers, amandiers, noisetiers, châtaigniers, oliviers, pommiers, pruniers, mirabelliers, cerisiers, caféiers, pistachiers, etc....

Jusqu'à ces dernières années, la récolte mécanique des fruits au moyen de pinces vibrantes était opérée après que ceux-ci soient parvenus à complète maturité.

Afin d'améliorer la qualité des fruits récoltés, de nombreux producteurs ont décidé, depuis quelques années, d'avancer les dates de récolte de ceux-ci, de façon à être mieux en phase avec la maturité physiologique de ces derniers. Cela nécessite toutefois l'utilisation de vibreurs de plus en plus performants, compte tenu de la plus grande difficulté pour détacher et faire chuter les fruits, les forces d'abscission de ces derniers étant en effet beaucoup plus importantes pour les récoltes précoces.

Or, on sait que la puissance de vibration nécessaire pour secouer les arbres de façon à réaliser une récolte complète est très importante (plusieurs dizaines de KW). Cette puissance de vibration est communiquée à l'arbre par l'intermédiaire de la pince vibrante. Cette dernière est donc soumise à des sollicitations mécaniques extrêmes. D'autre part, pour déterminer la puissance de vibration à mettre en oeuvre pour générer les vibrations nécessaires pour réaliser une récolte satisfaisante, on doit prendre en compte le fait que le poids de la pince vibrante s'ajoute au poids virtuel de l'arbre en mouvement lors du secouage de ce dernier.

Pour satisfaire à ces contraintes et assurer une bonne fiabilité, la construction des pinces vibrantes est réalisée en matériau métallique résistant et massif.

Par exemple, les mâchoires des pinces vibrantes sont généralement constituées par des poutres-caissons conformées de manière adéquate et composées d'une plaque supérieure et d'une plaque inférieure assemblées par des plaques latérales s'étendant d'une extrémité à l'autre desdites plaques supérieure et inférieure et rendues solidaires de ces dernières par soudure. Le ou les supports des organes actifs de la pince vibrante, sont généralement réalisés selon le même principe.

Un inconvénient des pinces vibrantes de ce genre qui sont pourtant actuellement les plus performantes, est qu'elles sont extrêmement lourdes. En effet, plus lourde est la pince vibrante, plus la quantité d'énergie nécessaire à son fonctionnement est importante et plus il est difficile, voire impossible, de travailler avec des fréquences élevées et/ ou avec des amplitudes importantes. En outre, le poids élevé des pinces vibrantes constitue un obstacle à la possibilité d'obtenir des accélérations rapides qui sont souhaitables pour l'obtention de bons résultats.

Un autre inconvénient des pinces vibrantes du genre susmentionné, résulte de l'assemblage par soudure des plaques constituant notamment leurs mâchoires ; en effet, il est bien connu que ce procédé d'assemblage génère des contraintes et parfois des amorces de rupture dans la zone affectée aux pièces à assembler. D'autre part, en cours de travail des pinces vibrantes, les vibrations et contraintes sont très importantes et détériorent les soudures qui se fissurent par fatigue. Enfin, l'assemblage par un procédé de soudage, des différentes pièces qu'il est nécessaire d'assembler rigidement, est un travail difficile et exigeant des mesures de sécurité, tandis que les pièces assemblées de la sorte ne peuvent pas être démontées, par exemple pour remédier à une éventuelle défaillance de l'une d'elles.

Les récoltes précoces nécessitent maintenant la mise en oeuvre de puissances plus importantes qui sont difficilement produites par les tracteurs ou les engins de récolte, lesquels ont des puissances utiles qui ne sont pas facilement extensibles. Les tracteurs et les engins de récolte disposent en général d'une puissance d'environ 100 CV moteur thermique.

Pour satisfaire cette nécessité de vibration plus importante, la seule solution technique, à puissance égale, est de réduire le poids de la pince vibrante. Cette réduction de poids peut être obtenue en allégeant les différents éléments constitutifs de la pince, sachant qu'il n'est pas possible de réduire les masses excentrées qui génèrent les vibrations, car au contraire, afin d'accroître l'intensité des vibrations, il serait plutôt nécessaire d'augmenter ces masses.

Dans le document FR- 2 799 610, on a proposé une tête de vibration comportant une pince vibrante allégée dont chaque mâchoire est constituée de deux plaques de forme allongée exécutées dans un matériau à haute limite élastique, ces plaques présentant la particularité d'être obtenues par découpage au laser et étant assemblées, en superposition et à distance l'une de l'autre par l'intermédiaire d'entretoises fixées auxdites plaques au moyen de vis.

Toutefois, une telle pince vibrante ne présente pas une réduction de poids très importante, de sorte qu'elle n'apporte pas une solution satisfaisante aux problèmes précédemment exposés.

Un objectif de la présente invention est donc d'obtenir un allègement très sensible du poids des pinces vibrantes sans amoindrir leur capacité de résistance aux contraintes mécaniques de flexion, de torsion, de cisaillement, et aux sollicitations alternées de fatigue.

Selon l'invention, ce but est atteint grâce à une pince vibrante du genre susmentionné dont au moins une mâchoire est constituée d'une enveloppe extérieure réalisée en matériau composite et disposée autour d'une âme ou noyau.

Suivant un mode d'exécution préféré, chacune des deux mâchoires de la pince est constituée d'une enveloppe extérieure en matériau composite disposée autour d'une âme ou noyau.

Grâce à l'invention, on obtient un allègement important de la pince vibrante dont le poids se trouve diminué approximativement de moitié par rapport à celui des pinces vibrantes actuellement proposées sur le marché, ce qui permet d'améliorer la puissance des vibrations et de réaliser les conditions nécessaires pour effectuer la récolte précoce des fruits, sans nécessiter une augmentation des puissances produites par les tracteurs ou engins de récolte actuels.

Selon un mode d'exécution, le noyau est réalisé en polymère alvéolaire rigide, par exemple en mousse de polyuréthanne ou en mousse de polystyrène.

Selon un autre mode d'exécution, le noyau comprend une armature métallique.

Suivant un premier exemple d'exécution de cette armature métallique, celle-ci est constituée par un assemblage de tôles pleines ou ajourées sur lesquelles sont fixées, par exemple par soudage, des inserts, en particulier une ou des pièces d'articulation et des pièces de fixation.

Selon un deuxième exemple d'exécution de ladite armature métallique, celle-ci est constituée par un treillis ou ensemble de tiges ou barres métalliques, par exemple de fils métalliques de petit diamètre, assemblés entre eux, par exemple par soudure, et sur lesquels sont fixés, par exemple par soudure, le ou les pièces d'articulation et les pièces de fixation.

Suivant un troisième exemple d'exécution, les vides délimités par les contours des armatures métalliques sont garnis ou remplis d'un polymère alvéolaire.

Selon une autre disposition caractéristique, l'enveloppe extérieure en matériau composite est réalisée en fibre de verre, ou en fibre de carbone, ou en fibre aramide, associée à des résines époxy ou polyester.

Selon un mode d'exécution préféré, l'enveloppe extérieure est constituée par un enroulement de bandes de tissu de fibre de verre, ou de tissu de fibre de carbone, ou de tissu de fibre aramide, imprégnées de résine.

Selon une autre disposition caractéristique, les mors de serrage de la pince sont fixés de manière amovible et interchangeable sur l'extrémité libre des mâchoires.

Selon un premier mode d'exécution, les mors amovibles et interchangeables peuvent avoir différentes formes en fonction de la conformation et de la grosseur des troncs ou des branches des arbres à secouer.

Selon un autre mode d'exécution, les mors amovibles et interchangeables sont réalisés en matériau métallique, de préférence en alliage léger à base d'aluminium ou de magnésium.

Selon un autre mode d'exécution, les mors amovibles et interchangeables sont réalisés en matériau composite, en particulier en fibre de verre, ou en fibre de carbone, ou en fibre aramide, associée à des résines époxy ou polyester.

Outre un important allègement des pinces vibrantes, l'invention a encore notamment pour avantage, une grande résistance aux contraintes mécaniques de flexion, de torsion et de cisaillement, ainsi qu'une résistance accrue aux sollicitations alternées de fatigue.

Les buts, caractéristiques et avantages ci-dessus et d'autres encore ressortiront mieux de la description qui suit et des dessins annexés dans lesquels :
La figure 1 est une vue en plan d'un exemple de réalisation de pince vibrante à laquelle peut être appliquée l'invention.

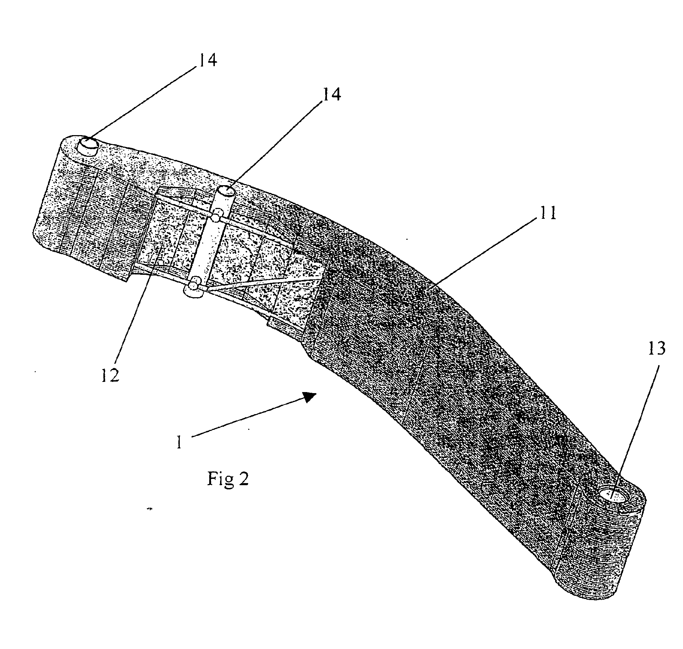

La figure 2 est une vue en perspective, avec arrachement partiel d'un exemple de réalisation d'une mâchoire de pince vibrante selon l'invention.
La figure 3 est une vue en coupe longitudinale de cette mâchoire.
La figure 4 en est une vue en coupe transversale, selon la ligne 4-4 de la figure 3.
La figure 5 est une vue en perspective d'un premier exemple de réalisation du noyau d'une mâchoire de pince vibrante.
La figure 6 est une vue en perspective d'un deuxième exemple d'exécution d'un tel noyau.
La figure 7 est une vue en perspective d'un troisième exemple de réalisation de ce noyau.
La figure 8 est une vue en perspective de l'ossature métallique du noyau représenté à la figure 7.
Les figures 9A et 9B sont des vues de face illustrant deux exemples de conformations des mors fixés de manière amovible et interchangeable sur l'extrémité libre des mâchoires de la pince vibrante.

On se réfère auxdits dessins pour décrire des exemples de réalisation intéressants, bien que nullement limitatifs, de la pince vibrante allégée selon l'invention.

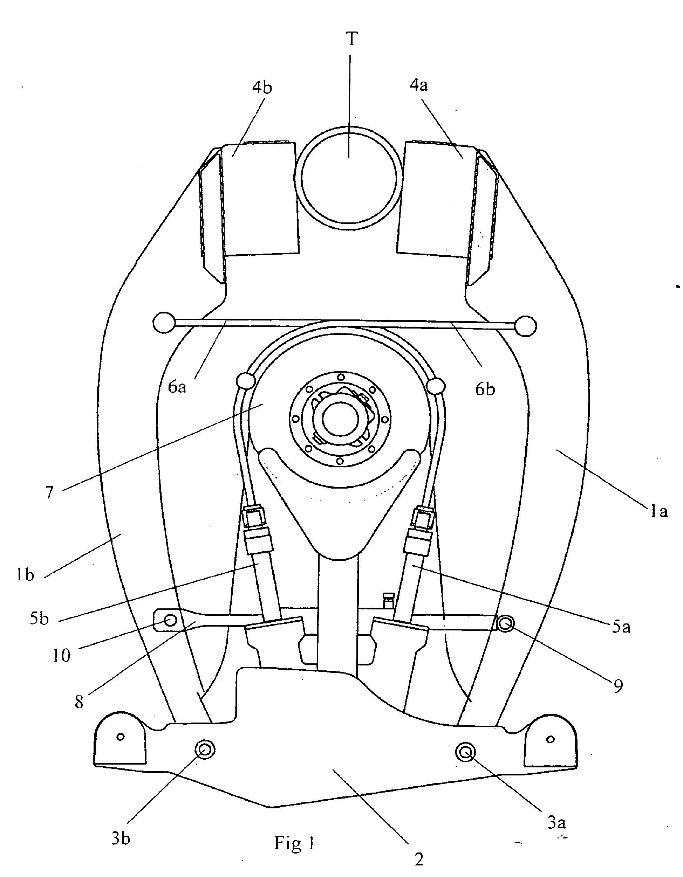

Sur la figure 1, on a représenté, à titre d'exemple seulement, une pince vibrante du genre auquel peut être appliquée l'invention, cette pince étant montrée en position de serrage sur le tronc T d'un arbre.

Elle comprend essentiellement deux mâchoires antagonistes 1a, 1b montées avec une aptitude de pivotement sur un support fixe 2, autour d'axes 3a et 3b, respectivement. Les extrémités libres de ces mâchoires sont équipées de mors 4a, 4b, respectivement, eux-mêmes munis, sur leur surface active de serrage, de garnitures ou coussins de caoutchouc ou autre matériau souple.

Selon l'exemple illustré, le pivotement des mâchoires 1a, 1b, en position de fermeture est assuré par des vérins 5a, 5b travaillant en tirant et reliés auxdites mâchoires par l'intermédiaire d'un ou plusieurs câbles 6a, 6b s'enroulant, par exemple, sur le carter cylindrique 7 renfermant le vibreur. L'ouverture de la pince est réalisée au moyen d'un vérin hydraulique 8 relié, par l'intermédiaire de ses extrémités opposées et au moyen d'articulations 9, 10, aux mâchoires 1a, 1 b, respectivement, à distance réduite des articulations 3a, 3b, de ces dernières sur le support fixe.

Selon une première disposition caractéristique importante de l'invention, au moins l'une des deux mâchoires 1 de la pince vibrante et, de préférence, chacune de ces mâchoires, est constituée d'une enveloppe extérieure 11 réalisée en matériau composite et disposée autour d'une âme ou noyau 12.

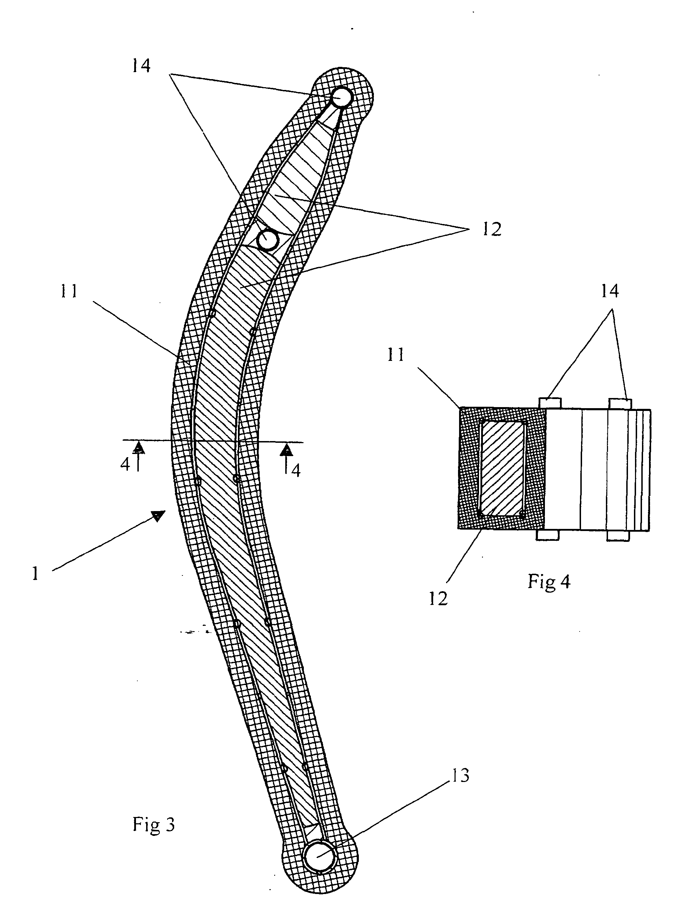

Comme illustré par la figure 3, le noyau ou âme 12 est entièrement renfermé dans l'enveloppe 11 et il s'étend approximativement d'une extrémité à l'autre de celle-ci.

Le noyau 12 peut être exécuté en différents matériaux.

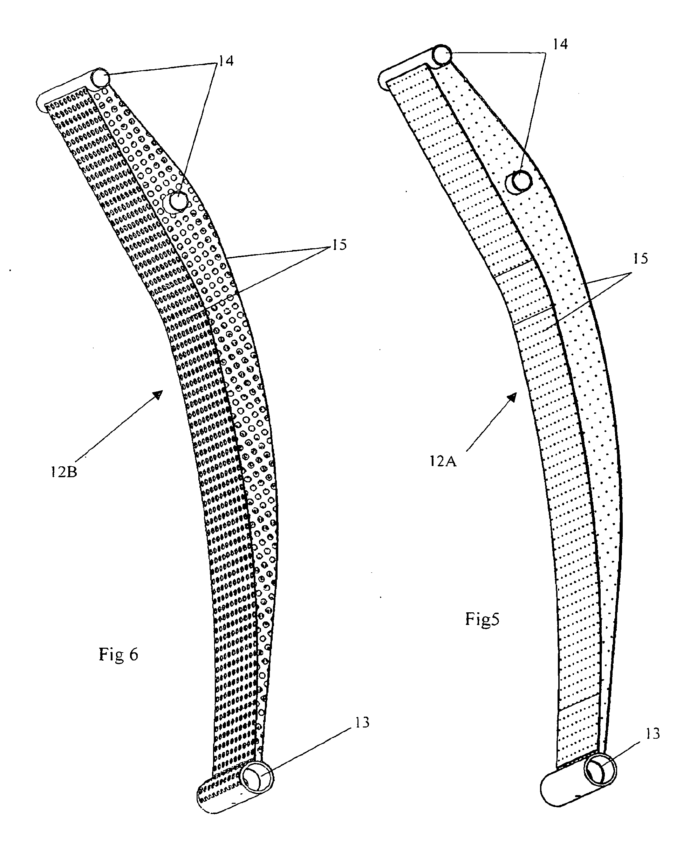

Suivant la figure 5, le noyau 12A est réalisé en polymère alvéolaire, par exemple en mousse de polyuréthanne ou en mousse de polyester.

La référence 13 désigne un insert tubulaire d'articulation permettant le montage pivotant de la mâchoire, tandis que la référence 14 désigne des inserts tubulaires taraudés ou non de fixation pour le montage d'un mors à l'extrémité de la mâchoire.

Le noyau 12 peut être réalisé entièrement ou non en matériau métallique.

Par exemple, il peut être constitué sous forme d'un caisson réalisé par l'assemblage de tôles pleines ou ajourées. La figure 6 représente un noyau 12B réalisé sous forme d'un caisson allongé et constitué par un assemblage de tôles ajourées 15. Sur ce noyau métallique 12B sont fixés, par exemple par soudage, l'insert ou les inserts d'articulation 13 et les inserts de fixation 14.

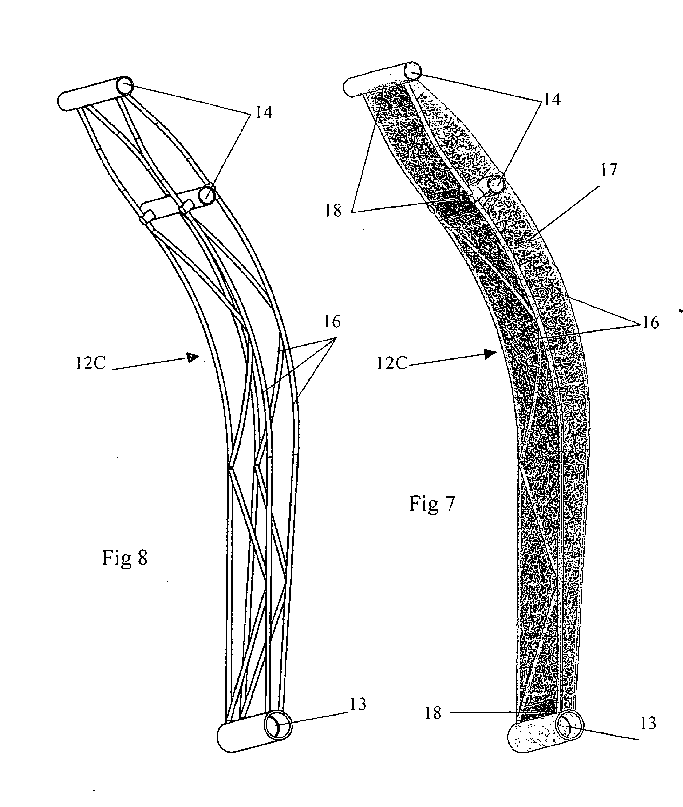

Le noyau 12C illustré sur les figures 7 et 8 est constitué par un treillis 16 ou ensemble de tiges ou barres métalliques, par exemple constituées par des fils ronds de petits diamètres, assemblés entre eux, par exemple par soudage et sur lesquels sont fixés, par exemple par soudure, l'insert ou les inserts d'articulation 13 et les inserts de fixation 14.

De manière préférée, les vides délimités par les contours de l'armature métallique par exemple constituée par l'assemblage de tôles 15 ou par le treillis 16 sont garnis ou remplis d'un polymère alvéolaire 17, par exemple de mousse de polystyrène.

Selon des modes d'exécution avantageux, l'enveloppe extérieure en matériau composite 11 peut être réalisée :
- en fibres de verre,
- ou en fibres de carbone,
- ou en fibres aramides,
- ou en mélange de ces matériaux,
associé(es) à des résines époxy ou à des résines polyester.

De préférence, l'enveloppe extérieure 11 est constituée par un enroulement, autour du noyau 12, de bandes de tissu de fibres de verre, ou de tissu de fibres de carbone, ou de tissu de fibres aramides, imprégnées de résine époxy ou de résine polyester.

Afin de renforcer la rigidité de la fixation des inserts 13, 14, par rapport à l'enveloppe 11, des blocs de résine compound 18 sont intégrés dans le noyau 12, autour desdits inserts ou en contact avec ces derniers.

Ces blocs compound peuvent être réalisés après exécution de l'enveloppe 11, par injection à travers celle-ci, d'une résine compound dans des réservations volumiques ménagées à l'intérieur de la structure du noyau 12, autour ou à proximité de la ou des pièces d'articulation 13 ou des pièces de fixation 14.

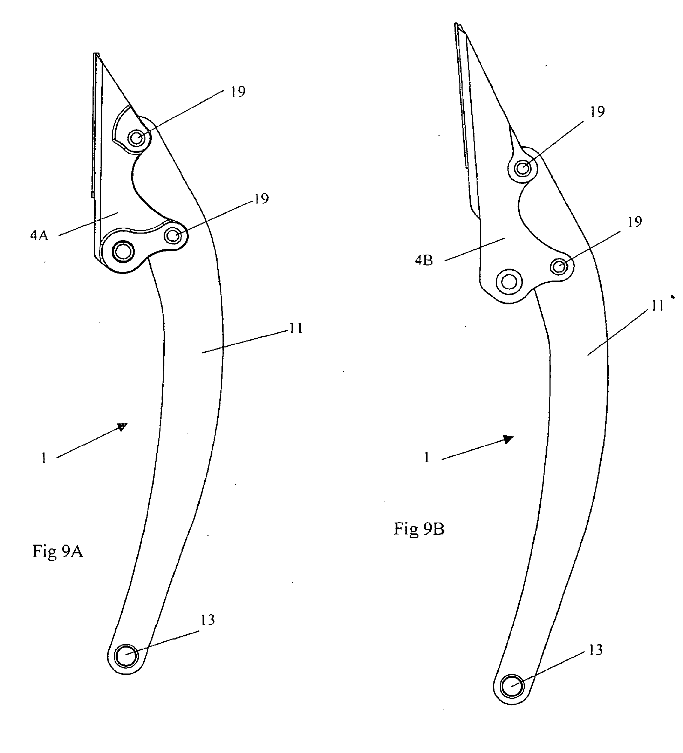

Selon une autre disposition caractéristique intéressante, les mors 4A ou 4B de la pince sont fixés de manière amovible et interchangeable sur l'extrémité libre des mâchoires 1, par exemple au moyen d'organes d'assemblage 19 traversant des orifices ménagés dans lesdits mors et les pièces de fixation 14 dont est munie l'extrémité libre des mâchoires 1 (Figures 9A et 9B).

Les mors amovibles et interchangeables peuvent avoir différentes formes adaptées à la conformation des troncs et des branches des arbres fruitiers et/ ou à la grosseur desdits troncs ou desdites branches.

Ils peuvent être exécutés en matériau métallique léger et résistant, de préférence en alliage léger à base d'aluminium ou de magnésium.

De manière avantageuse, ils peuvent être réalisés en matériau composite, en particulier en fibres de verre, ou en fibres de carbone, ou en fibres aramides, associées à des résines époxy ou polyester, de manière analogue aux mâchoires 1a, 1b.

De même, les autres composants rigides de la pince vibrante, tels que, par exemple, le corps de pince 2, et/ ou le carter 7 renfermant le vibreur, et/ ou le corps des vérins 5a, 5b, et/ ou les éléments de liaison entre les vérins de serrage 5a, 5b et les mâchoires 1a, 1b, lorsque lesdits éléments sont constitués par des biellettes, peuvent également être exécutés en matériau composite, en particulier en fibre de verre, ou en fibre de carbone, ou en fibre aramide, associées à des résines époxy ou polyester, de manière comparable aux mâchoires 1a, 1 b.

D'autre part, lorsque les éléments de liaison (6a, 6b) entre les vérins de serrage 5a, 5b et les mâchoires 1a, 1b, sont réalisés dans un matériau souple, par exemple sous forme de sangles ou de câbles, ces éléments peuvent être exécutés en textile à haute résistance, par exemple en fibre deenema, ou en fibre de carbone, ou en fibre aramide.

## Revendications

1. Pince vibrante allégée, pour machines de récolte de fruits par secouage, du genre comportant deux mâchoires susceptibles d'être rapprochées ou éloignées l'une de l'autre, **caractérisée en ce que** l'une au moins des mâchoires (1) de la pince est constituée d'une enveloppe extérieure (11) réalisée en matériau composite et disposée autour d'une âme ou noyau (12).

2. Pince vibrante selon la revendication 1, **caractérisée en ce que** chacune des deux mâchoires (1) de la pince est constituée d'une enveloppe extérieure (11) en matériau composite disposée autour d'une âme ou noyau (12).

3. Pince vibrante suivant l'une des revendications 1 ou 2, **caractérisée en ce que** le noyau (12A) est réalisé en polymère alvéolaire, par exemple en mousse de polyuréthanne ou en mousse de polystyrène.

4. Pince vibrante selon l'une des revendications 1 ou 2, **caractérisée en ce que** le noyau (12) comprend une armature métallique.

5. Pince vibrante suivant la revendication 4, **caractérisée en ce que** l'armature métallique du noyau (12B) est constituée par un assemblage de tôles pleines ou ajourées (15) sur lequel sont fixés, par exemple par soudage, des inserts, en particulier une ou des pièces d'articulation (13) et des pièces de fixation (14).

6. Pince vibrante selon la revendication 4, **caractérisée en ce que** l'armature métallique du noyau (12C) est constituée par un treillis ou ensemble de tiges ou barres métalliques, par exemple de fils métalliques de petit diamètre (16) assemblés entre eux, par exemple par soudure, et sur lesquels sont fixés, par exemple par soudure, des inserts, en particulier une ou des pièces d'articulation (13) et des pièces de fixation (14).

7. Pince vibrante selon l'une quelconque des revendications 4 à 6, **caractérisée en ce que** les vides délimités par les contours des armatures métalliques (15, 16) sont garnis ou remplis d'un polymère alvéolaire (17).

8. Pince vibrante suivant l'une quelconque des revendications 1 à 7, **caractérisée en ce que** l'enveloppe extérieure (11) en matériau composite de la mâchoire ou de chaque mâchoire (1) est réalisée en fibre de verre, ou en fibre de carbone, ou en fibre aramide, associée à des résines époxy ou polyester.

9. Pince vibrante selon la revendication 8, **caractérisée en ce que** l'enveloppe extérieure (11) en matériau composite est constituée par un enroulement de bandes de tissu de fibre de verre, ou de tissus de fibre de carbone, ou de tissu de fibre aramide, imprégnées de résine.

10. Pince vibrante selon l'une quelconque des revendications 1 à 9, **caractérisée en ce que** des blocs de résine compound (18) sont intégrés dans le noyau (12) autour des inserts (13, 14) ou en contact avec ces derniers.

11. Pince vibrante suivant l'une quelconque des revendications 1 à 10, **caractérisée en ce que** les mors de serrage (4A ou 4B) de la pince sont fixés de manière amovible et interchangeable sur l'extrémité libre des mâchoires.

12. Pince vibrante selon l'une quelconque des revendications 1 à 11, **caractérisée en ce que** les mors amovibles et interchangeables (4A ou 4B) sont réalisés en matériau métallique, de préférence en alliage léger à base d'aluminium ou de magnésium.

13. Pince vibrante suivant l'une quelconque des revendications 1 à 11, **caractérisée en ce que** les mors amovibles et interchangeables (4A, 4B) sont réalisés en matériau composite, en particulier en fibre de verre, ou en fibre de carbone, ou en fibre aramide, associée à des résines époxy ou à des résines, polyester.

14. Pince vibrante selon l'une quelconque des revendications 1 à 13, **caractérisée en ce que** ses autres composants rigides tels que, par exemple, le corps de pince (2), et/ ou le carter 7 renfermant le vibreur, et/ ou le corps des vérins (5a, 5b), et/ ou les éléments de liaison entre les vérins de serrage (5a, 5b) et les mâchoires (1a, 1b) lorsque lesdits éléments sont constitués par des biellettes, sont exécutés en matériau composite, en particulier en fibre de verre, ou en fibre de carbone, ou en fibre aramide, associée à des résines époxy ou aramide.

15. Pince vibrante suivant l'une quelconque des revendications 1 à 14, selon laquelle les éléments de liaison (6a, 6b) entre les vérins de serrage (5a, 5b) et les mâchoires (1a, 1b) sont réalisés dans un matériau souple, par exemple sous forme de sangles ou de câbles, **caractérisée en ce que** ces éléments sont exécutés en textile à haute résistance, par exemple en fibre deenema, ou en fibre de carbone ou en fibre aramide.

## Claims

1. Lightened vibrating clamp for machines that harvest fruit by shaking, of the type comprising two jaws which can be brought together or moved apart, **characterised in that** at least one of the jaws (1) of the clamp consists of an exterior jacket (11) made of composite material and positioned around a web or core (12).

2. Vibrating clamp according to claim 1, **characterised in that** each of the two jaws (1) of the clamp consists of an exterior jacket (11) made of composite material, disposed around a web or core (12).

3. Vibrating clamp according to either claim 1 or 2, **characterised in that** the core (12A) is made from alveolar polymer, for example from polyurethane foam or polystyrene foam.

4. Vibrating clamp according to either claim 1 or 2, **characterised in that** the core (12) comprises a metallic reinforcement.

5. Vibrating clamp according to claim 4, **characterised in that** the metallic reinforcement of the core (12B) consists of an assembly of pieces of solid or perforated sheet metal (15), inserts being attached thereto, for example by welding, in particular one or more hinge pieces (13) and fastening pieces (14).

6. Vibrating clamp according to claim 4, **characterised in that** the metallic reinforcement of the core (12C) consists of a trellis or an assembly of metallic rods or bars, for example metallic wires of small diameter (16) joined together, for example by welding, and on which inserts are fixed, for example by welding, in particular one or more hinge pieces (13) and fastening pieces (14).

7. Vibrating clamp according to any one of claims 4 to 6, **characterised in that** the openings defined by the contours of the metallic reinforcements (15, 16) are lined or filled with alveolar polymer (17).

8. Vibrating clamp according to any one of claims 1 to 7, **characterised in that** the exterior jacket (11) made from composite material of the jaw or of each jaw (1) is composed of fibreglass, carbon fibre or aramid fibre, in association with epoxy or polyester resins.

9. Vibrating clamp according to claim 8, **characterised in that** the exterior jacket (11) made from composite material is formed by a winding of bands of fibreglass fabric, or carbon fibre fabrics, or aramid fibre fabric, impregnated in resin.

10. Vibrating clamp according to any one of claims 1 to 9, **characterised in that** the compound resin blocks (18) are integrated into the core (12) around the inserts (13, 14) or in contact with the latter.

11. Vibrating clamp according to any one of claims 1 to 10, **characterised in that** the grips (4A or 4B) of the clamp are attached in a removable and interchangeable manner on the free ends of the jaws.

12. Vibrating clamp according to any one of claims 1 to 11, **characterised in that** the removable and interchangeable grips (4A or 4B) are made from metallic material, preferably a light aluminium- or magnesium-based alloy.

13. Vibrating clamp according to any one of claims 1 to 11, **characterised in that** the removable and interchangeable grips (4A, 4B) are made from composite material, in particular of fibreglass, carbon fibre or aramid fibre, in association with epoxy resins or polyester resins.

14. Vibrating clamp according to any one of claims 1 to 13, **characterised in that** its other rigid components, such as, for example, the clamp body (2), and/or the housing (7) enclosing the vibrator, and/or the body of the jacks (5a, 5b) and/or the link elements between the jacks (5a, 5b), and the jaws (1 a, 1b), when said elements consist of connecting rods, are made from composite material, in particular of fibreglass, carbon fibre or aramid fibre, in association with epoxy or aramid resins.

15. Vibrating clamp according to any one of claims 1 to 14, **characterised in that** the link elements (6a, 6b) between the jacks (5a, 5b) and the jaws (1a, 1 b) are made from a flexible material, for example in the form of straps or cables, **characterised in that** these elements are made from high-resistance textile, for example of Deenema fibre, or of carbon fibre or aramid fibre.

## Patentansprüche

1. Rüttelzange in leichter Ausführung für Rüttelerntemaschinen zur Obsternte, der Bauart, die zwei Klemmbacken aufweist, die sich aneinander annähern oder voneinander entfernen können, **dadurch gekennzeichnet, dass** mindestens eine der Klemmbacken (1) der Zange aus einer äußeren Hülle (11) gebildet wird, die aus Verbundmaterial ausgeführt ist und um einen Steg oder Kern angeordnet ist.

2. Rüttelzange nach Anspruch 1, **dadurch gekennzeichnet, dass** jede der beiden Klemmbacken (1) der Zange aus einer äußeren Hülle (11) aus Verbundmaterial gebildet ist, die um einen Steg oder Kern (12) angeordnet ist.

3. Rüttelzange nach einem der Ansprüche 1 oder 2, **dadurch gekennzeichnet, dass** der Kern (12A) aus zelligem Polymer ausgeführt ist, zum Beispiel aus Polyurethan-Schaumstoff oder Polystyrol-Schaumstoff.

4. Rüttelzange nach einem der Ansprüche 1 oder 2, **dadurch gekennzeichnet, dass** der Kern (12) eine Metallarmierung aufweist.

5. Rüttelzange nach Anspruch 4, **dadurch gekennzeichnet, dass** die Metallarmierung des Kerns (12B) durch Zusammenfügen von durchgehenden oder durchbrochenen Blechen (15) gebildet wird, auf denen beispielsweise mittels Schweißen Einsätze befestigt sind, insbesondere ein oder mehrere Gelenkstücke (13) oder Befestigungsstücke (14).

6. Rüttelzange nach Anspruch 4, **dadurch gekennzeichnet, dass** die Metallarmierung des Kerns (12C) aus einem Geflecht oder einer Einheit aus Metallstiften oder - stäben gebildet wird, beispielsweise aus Metalldrähten mit geringem Durchmesser (16), die zum Beispiel mittels Schweißen zusammengefügt sind, und auf denen zum Beispiel mittels Schweißen Einsätze befestigt sind, insbesondere ein oder mehrere Gelenkstücke (13) oder Befestigungsstücke (14).

7. Rüttelzange nach einem der Ansprüche 4 bis 6, **dadurch gekennzeichnet, dass** die durch die Konturen der Metallarmierungen (15, 16) begrenzten Hohlräume mit einem zelligen Polymer (17) versehen oder gefüllt sind.

8. Rüttelzange nach einem der Ansprüche 1 bis 7, **dadurch gekennzeichnet, dass** die äußere Verbundmaterial-Hülle (11) der oder jeder Klemmbacke (1) aus Glasfaser oder aus Karbonfaser oder aus Aramidfaser ausgeführt ist, das mit Epoxid- oder Polyesterharzen verbunden ist.

9. Rüttelzange nach Anspruch 8, **dadurch gekennzeichnet, dass** die äußere Verbundmaterial-Hülle (11) von einer Wicklung aus Bändern aus Glasfasergewebe oder aus Karbonfasergewebe oder aus Aramidfasergewebe gebildet ist, die mit Harz getränkt sind.

10. Rüttelzange nach einem der Ansprüche 1 bis 9, **dadurch gekennzeichnet, dass** Blöcke aus Harzverbindungen (18) in den Kern (12) um die Einsätze (13, 14) oder in Kontakt mit den Letzteren integriert sind.

11. Rüttelzange nach einem der Ansprüche 1 bis 10, **dadurch gekennzeichnet, dass** die Backen (4A oder 4B) der Zange abnehmbar und austauschbar am freien Ende der Klemmbacken befestigt sind.

12. Rüttelzange nach einem der Ansprüche 1 bis 11, **dadurch gekennzeichnet, dass** die abnehmbaren und austauschbaren Backen (4A oder 4B) aus einem metallischen Material ausgeführt sind, vorzugsweise aus einer leichten Legierung auf Aluminium - oder Magnesiumbasis.

13. Rüttelzange nach einem der Ansprüche 1 bis 11, **dadurch gekennzeichnet, dass** die abnehmbaren und austauschbaren Backen (4A, 4B) aus einem Verbundmaterial ausgeführt sind, insbesondere aus Glasfaser oder aus Karbonfaser oder aus Aramidfaser, das mit Epoxid- oder Polyesterharzen verbunden ist.

14. Rüttelzange nach einem der Ansprüche 1 bis 13, **dadurch gekennzeichnet, dass** ihre anderen starren Komponenten, wie zum Beispiel der Zangenkörper (2) und/oder das Gehäuse (7), das den Rüttler umschließt, und/oder der Körper der Zylinder (5a, 5b) und/oder die Verbindungselemente zwischen den Klemmzylindern (5a, 5b) und den Klemmbacken (1a, 1b), wenn die Elemente aus Schaltgestängen gebildet werden, aus einem Verbundmaterial ausgeführt sind, insbesondere aus Glasfaser oder aus Karbonfaser oder aus Aramidfaser, das mit Epoxid- oder Polyesterharzen verbunden ist.

15. Rüttelzange nach einem der Ansprüche 1 bis 14, gemäß welcher die Verbindungselemente (6a, 6b) zwischen den Klemmzylindern (5a, 5b) und den Klemmbacken (1a, 1b) aus einem flexiblen Material ausgeführt sind, beispielsweise in Form von Gurten oder Kabeln, **dadurch gekennzeichnet, dass** diese Elemente aus hochfestem Textil bestehen, zum Beispiel aus Dyneema-Faser oder aus Karbonfaser oder aus Aramidfaser.
